# EUROPEAN PATENT APPLICATION

(11) **EP 0 579 584 A1**
(43) Date of publication of application: **19.01.1994**
(21) Application number: 93830301.3
(22) Date of filing: 14.07.1993
(51) Int. Cl.: B60B 3/16

(54) **Motorvehicle wheel provided with radial slots for the fastening**

(30) Priority: 16.07.1992 IT MI921730
(71) Applicant: STILAUTO RUOTE S.r.l., I-20019 Settimo Milanese (IT)
(72) Inventor: Pezzoni, Vittorio, I-20155 Milano (IT)
(74) Representative: Pizzoli, Pasquale Vincenzo

(57) **Abstract**

A metallic motorvehicle wheel, in particular made of light metal, provided with a series of fastening slots (2) equally spaced and equidistant from the wheel centre, wherein the contour of each slot (2) is made up of two parallel straight segments (4, 4') connected by two semicircumferences (3, 3') whose centres are on a same geometrical radius of the wheel, each slot (2) being formed on the bottom of a respective recess (5). The wheel is fastened to the hub by means of standard screws or nuts (8) each of which in inserted in a respective slot (2) and in the hole of a washer (9) inserted without play in the corresponding recess (5). It is therefore possible to mount the wheel on any hub whose fastening holes or studs have axes included between two extremes (7, 7') coinciding with the centres of the semicircumferences (3, 3').

## Description

The present invention refers to motorvehicle wheels and in particular to a wheel provided with radial slots for its fastening to the vehicle hub.

It is known that the wheels are fastened to the hubs of the vehicles by means of screws or nuts which are inserted in suitable holes in the wheels and screwed into corresponding threaded holes or studs present on the wheel hubs. The necessity of the correspondence between the above-mentioned holes has given rise to researches aimed at disclosing multiple fastening systems, that is suitable to allow the fastening of a wheel on different types of hubs. Therefore, wheels have been conceived that, to result adaptable to different types of vehicles, are provided with two or more series of fastening holes, each series including a certain number of equally spaced holes equidistant from the rim centre. In this way, a same wheel can be mounted on hubs whose threaded fastening holes or studs have different centre distances. Wheels are already known achieving the same object with two or more series of holes each of which is obtained from the partial superimposition of two circular holes whose centres are on the same geometrical radius of the wheel at different distances from the centre. In this way, it is possible to double the number of different centre distances to which the wheel can be adapted.

It is apparent that the common drawback of the wheels of known kind is that they can be adapted only to a very small number of hubs, that is those having fastening holes or studs whose centre distances correspond to few precise values.

The object of the present invention is therefore to provide a wheel suitable to be mounted on a greater number of hubs, that is those whose threaded fastening holes or studs have a centre distance which may vary continuously between a minimum and a maximum value.

This object is achieved according to the present invention by means of a wheel provided with a series of equally spaced fastening slots equidistant from the wheel centre, wherein the contour of said slots is made up of two parallel straight segments connected by two semicircumferences whose centres are on a same geometrical radius of the wheel, each of said slots being formed on the bottom of a respective recess formed on the wheel external flange.

The wheel according to the present invention also has the advantage of being suitable to be mounted on hubs whose threaded fastening holes or studs have a diameter smaller than the wheel ones, thus avoiding, as it will be explained later on, the problems coming from possible plays of fastening screws or nuts inside the wheel holes.

These and other advantages of wheel according to the present invention will be apparent from the following detailed description of an embodiment thereof, referring to the annexed drawings wherein:
Fig.1 is a schematic view of the external flange of the wheel according to the present invention; and
Fig.2 is a partly sectional view of a detail of fig.1.

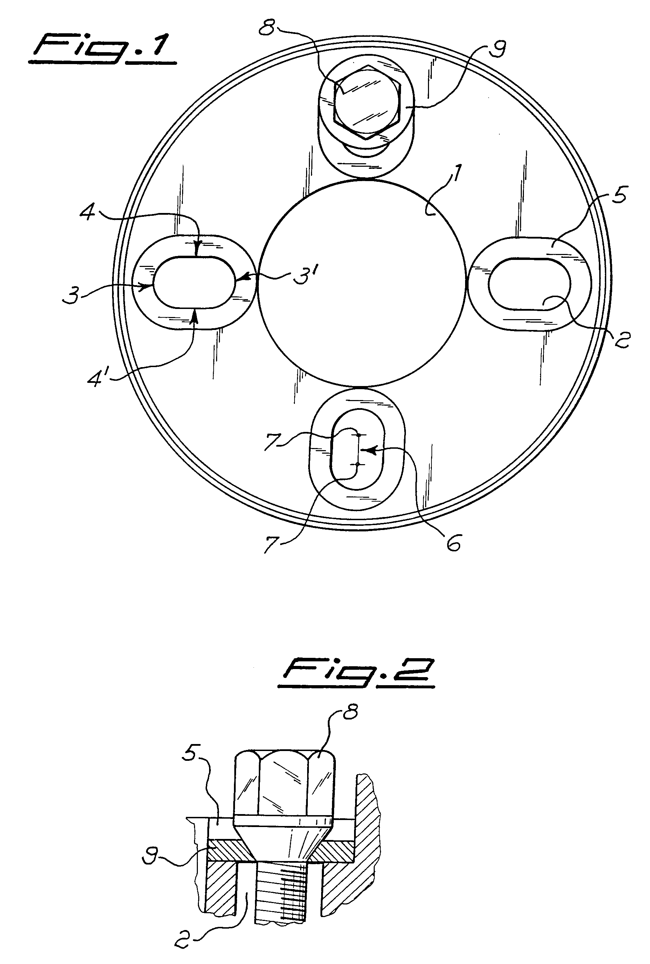

Referring to fig.1, it can be seen that a wheel according to the present invention includes a flange provided, in addition to the usual centering hole 1, also with four radial slots 2 of extended shape, equally spaced and equidistant from the wheel centre. The number of said slots may vary at will within the limits imposed by the commercial standards.

Each slot 2 is made up of parallel straight walls 4, 4' connected at their ends by two semicircular walls 3, 3', and is formed on the bottom of a corresponding recess or seat 5, located on the flange, whose contour is precisely parallel to that of the slot 2.

Thanks to the particular shape of the slots 2, the wheel according to the present invention can be mounted on any hub provided with as many equally spaced threaded holes or studs whose centre distances may vary continuously along the segment 6 joining the centres 7, 7' of the two semicircumferences 3, 3' which delimit the slot 2.

Fig.1 also shows the head of a screw (or a nut) 8 inserted into one of the slots 2 through the hole of a washer 9 inserted without play in the recess 5. To achieve this, the washer 9 has an outer diameter coinciding with the width of the recess 5 wherein it is inserted.

Referring to fig.2, it can be seen that the hole of the washer 9 has a suitable conical truncated shape, and this clever device allows the washer 9 to fit the head of the screw or the nut 8, having a conical truncated shape as well, so as to assure a tighter clamping. Fig.2 also shows how the washer 9 perfectly fits the recess 5 which houses it. It is apparent that the slot 2 may have a width significantly greater than the diameter of the screw or nut 8, and that the hole of the washer 9 and the head of the screw or the nut 8 may also be "spherical".

For what said above, the washer 9 transfers the axial stress coming from the tightening of the screw or nut 8 onto the surface surrounding the slot 2 and forming the bottom of the recess 5. The same washer 9, on the other hand, transfers the tangential thrust coming from the tendency to mutual sliding between the wheel and the hub wherein the screw or nut 8 is fixed to the walls of the recess 5.

It is clear that the holes formed on the wheel flange, as well as the recesss 5 surrounding them, may be in different number and have different size.

It is also clear that the washers 9 must have a size suitable for the respective seats 5, but they may be of any other type which assures the above-described functionalities.

## Claims

1. A metallic motorvehicle wheel provided with a series of radial fastening slots (2) equally spaced and equidistant from the wheel centre, characterized in that the contour of each slot (2) is made up of two parallel straight segments (4, 4') connected by two semicircumferences (3, 3') whose centres are on a same geometrical radius of the wheel, each of said slots being formed on the bottom of a respective recess (5) formed on the wheel external flange.

2. A wheel according to claim 1, characterized in that a washer (9) having its diameter equal to the distance between the walls of the recess (5) is slidably inserted into each recess (5).

3. A wheel according to claim 2, characterized in that the hole of the washer (9) has converging walls.
